# EUROPÄISCHE PATENTSCHRIFT

(11) **EP 0 679 499 B1**
(45) Veröffentlichungstag und Bekanntmachung des Hinweises auf die Patenterteilung: **22.09.1999**
(21) Anmeldenummer: 95104249.8
(22) Anmeldetag: 23.03.1995
(51) Int. Cl.: B29C 69/00, F16C 13/00

(54) **Verfahren, spritzgegossene Laufrolle und Spritzgiessform zur Herstellung einer Laufrolle, insbessondere für Schubauszüge von Geschirrspülmaschinen**
Method, injection moulded roller and injection mould for manufacturing a roller in particular for drawers of dishwashing machines
Procédé, galet moulé par injection et moule d'injection pour fabriquer un galet, notamment pour tiroirs de machines à laver la vaisselle

(30) Priorität: 18.04.1994 DE 4412775
(43) Veröffentlichungstag der Anmeldung: 02.11.1995
(73) Patentinhaber: Hachtel, Friedrich, 73431 Aalen (DE)
(72) Erfinder: Hachtel, Friedrich, 73431 Aalen (DE)
(74) Vertreter: Möbus, Rudolf, Dipl.-Ing.

(56) Entgegenhaltungen:
- WO-A-84/00327
- WO-A-93/13927
- DE-A- 4 241 409
- FR-A- 1 159 313

## Beschreibung

Die Erfindung betrifft ein Verfahren, eine spritzgegossene Laufrolle, insbesondere für Schubauszüge von Geschirrspülmaschinen, und eine Spritzgießform zur Herstellung einer Laufrolle gemäß den Oberbegriffen der Ansprüche 1, 3 und 6.

Aus Kunststoff gespritzte Laufrollen sind gerade auch für Schubauszüge von Geschirrspülmaschinen bereits bekannt. Diese Laufrollen werden bisher in der Regel in Backenformen hergestellt, wodurch jedoch stets ein Trenngrad auf der Lauffläche der Laufrolle entsteht, der anschließend durch Spanbearbeitung der Rollenrohlinge entfernt werden muß, um eine gute Laufeigenschaft der Rolle zu erzielen. Auch das Auftreten eines leichten Versatzes der beiden Hälften der Rolle ist möglich, der sich durch nachträgliche Spanbearbeitung auch nicht mehr ausgleichen läßt. Der Rundlauf solcher Rollen ist äußerst schlecht, so daß diese Rollen weitgehend unbrauchbar sind. Nach einem anderen bekannten Verfahren werden die Laufrollen aus zwei Teilen hergestellt, die zunächst gegossen und in einem nachfolgenden Arbeitsgang durch Zusammenpressen zur fertigen Laufrolle montiert werden. Auch dieses Verfahren ist durch die Benötigung eines weiteren Arbeitsschrittes zur Montage der Rolle, bei dem Werkzeuge zur Aufnahme der beiden Teile der Rolle aus einem Vorratsbehälter und Werkzeuge zum Verpressen der beiden Teile vorgesehen werden müssen, aufwendig und teuer. Außerdem können auch hier Probleme in der Rundlaufgenauigkeit der Rollen auftreten, wenn die beiden Teile nach der Montage nicht exakt koaxial ausgerichtet sind. Ursache hierfür sind meist leichte Fehler in der Gießform. Bei Herstellung der beiden Rollenteile in Vielfachformen, bei der mehrere Teile gleichzeitig gegossen werden, kann ein solcher Fehler in einer Form für den einen der beiden Rollenteile durch eine entsprechende Abänderung einer Form für den anderen Rollenteil nicht ausgeglichen werden, da die beiden Rollenteile jeweils in getrennten Behältern gesammelt und anschließend in beliebiger Zuordnung zu Laufrollen zusammengesetzt werden.

Der Erfindung liegt die Aufgabe zugrunde, ein Verfahren und eine Spritzgießform zur Herstellung einer Laufrolle in Verbindung mit einer bestimmten Ausgestaltung der Laufrolle zu schaffen, die es ermöglichen, Laufrollen mit glatter Lauffläche und exaktem Rundlauf kostengünstig herzustellen.

Die gestellte Aufgabe wird mit einem Verfahren zur Herstellung einer Laufrolle, die aus zwei in axialer Richtung zusammengesetzten Teilen besteht, gelöst, das erfindungsgemäß gekennzeichnet ist durch die Schritte:
- gleichzeitiges Spritzen der beiden Rollenteile in gesonderten Hohlräumen einer gemeinsamen Spritzgießform,
- Öffnen der Spritzgießform, wobei die beiden Rollenteile an gegenüberliegenden Hälften der Spritzgießform festgehalten werden,
- Gegeneinanderverdrehen der Spritzgießformhälften, so daß sich die beiden Teile der Laufrolle gegenüberstehen,
- Koppelung der beiden Teile durch Aufeinanderdrücken mittels mindestens eines Teils der Spritzgießform zu einer fertigen Laufrolle.

Dabei können gleichzeitig mehrere Laufrollenteile in der Spritzgießform gegossen und anschließend zu fertigen Laufrollen montiert werden. Die Ausbildung eines die Eigenschaften der Laufrolle störenden Grades auf der Lauffläche oder eines Versatzes zweier Hälften kann bei diesem Herstellungsverfahren nicht auftreten. Die Lauffläche wird vollständig von einem der beiden Rollenteile gebildet, der andere Rollenteil bildet eine zentrale Aufnahmeöffnung für eine Achse oder für Achszapfen. Außerdem erfolgt das Spritzen und das Zusammensetzen der beiden Rollenteile in einem einzigen Werkzeug. Dies hat den großen Vorteil, daß das Auffangen der in großen Mengen in Vielfach-Formen hergestellten Rollenteile und das anschließende Aufgreifen der Teile zur Endmontage der Laufrollen entfällt. Das erfindungsgemäße Verfahren ist damit sehr viel schneller und kostengünstiger als die bekannten Verfahren. Ein weiterer großer Vorteil des erfindungsgemäßen Verfahrens besteht in einer Korrekturmöglichkeit, falls die beiden Rollenteile durch Herstellungsfehler nicht exakt koaxial in der Laufrolle angeordnet und damit der Rundlauf der Laufrolle gestört ist. Diese Fehler können durch kleine Ungenauigkeiten in einem der Hohlräume zur Ausbildung des einen Typs von Rollenteilen verursacht werden. Dadurch, daß nach dem erfindungsgemäßen Verfahren das in diesem fehlerhaften Hohlraum gegossene Rollenteil stets mit einem in einem genau zugeordneten Hohlraum gegossenen Gegenstück zu einer fertigen Laufrolle zusammengesetzt wird, ist es möglich, durch eine entsprechende Abänderung des Hohlraums des Gegenstücks den Fehler anzugleichen. Auf diese Weise ist auch bei Verwendung von Vielfachformen eine Optimierung der Formen und der Prozeßsteuerung beim Spritzgießen der Rollenteile möglich. Die produzierten Laufrollen haben dadurch hervorragende Laufeigenschaften. Ausschuß kann praktisch nicht mehr entstehen.

Die zur Durchführung des Verfahrens eingesetzte Spritzgießform ist von zwei in axialer Richtung gegeneinander verfahrbaren und uni die Längsachse relativ zueinander verdrehbaren Formhälften gebildet, die gemeinsam mindestens einen ersten Hohlraum zur Formung des ersten Laufrollenteils und mindestens einen zweiten Hohlraum zur Formung des zweiten Laufrollenteils bilden, wobei die ersten und zweiten Hohlräume jeweils bezüglich der Längsachse der Spritzgießform symmetrisch angeordnet sind, und wobei mindestens eine der Formhälften einen in axialer Richtung beweglichen Teil zum Aufeinanderdrücken der beiden Laufrollenteile aufweist. Dabei kann zweckmäßigerweise eine der Formhälften, insbesondere die der Spritzdüse zugewandte Hälfte, nicht rotierend und die andere Formhälfte um ± 180° um die Längsachse der Spritzgießform verdrehbar angeordnet sein. Durch die zur Längsachse symmetrisch angeordneten Hohlräume für die beiden Rollenteiltypen werden durch Verdrehen der einen Formhälfte um 180° die Rollenteile paarweise in Montagestellung gebracht und durch Aufeinanderpressen zu fertigen Laufrollen montiert und ausgeworfen. Anschließend dreht die Formhälfte wieder in ihre Ausgangslage zum Spritzen neuer Rollenteile zurück.

Bei der spritzgegossenen Laufrolle können die beiden Teile durch eine Rastverbindung miteinander unlösbar gekoppelt sein. Außerdem können die beiden Rollenteile mit einer gegenseitigen Verdrehsicherung ausgestattet sein, um auch bei starker Belastung der Laufrolle ein Rutschen der beiden Teile aufeinander zu verhindern.

Nachfolgend werden anhand der Zeichnung ein erfindungsgemäßes Verfahren zur Herstellung einer Laufrolle und die dazugehörigen Spritzgußformen näher erläutert.

Im einzelnen zeigen:
- Fig. 1: einen Teilschnitt durch eine Spritzgießform in einem ersten Verfahrensstadium zur Herstellung einer Laufrolle;
- Fig. 2: einen der Fig. 1 entsprechenden Teilschnitt durch eine Spritzgießform in einem zweiten Verfahrensstadium;
- Fig. 3: einen den Fig. 1 und 2 entsprechender Teilschnitt durch eine Spritzgießform in einem dritten Verfahrensstadium;
- Fig. 4: einen zentralen Längsschnitt durch eine Spritzgießform;
- Fig. 5: eine Draufsicht auf eine Hälfte einer Vielfach-Spritzgießform.

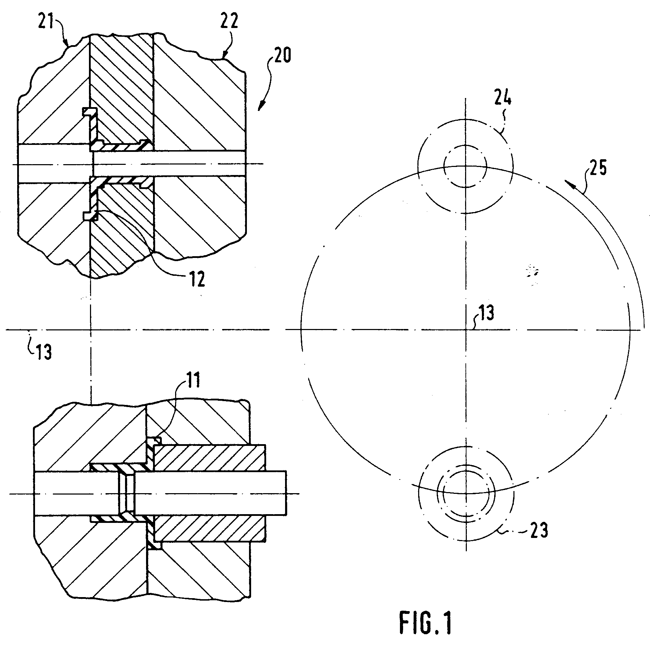

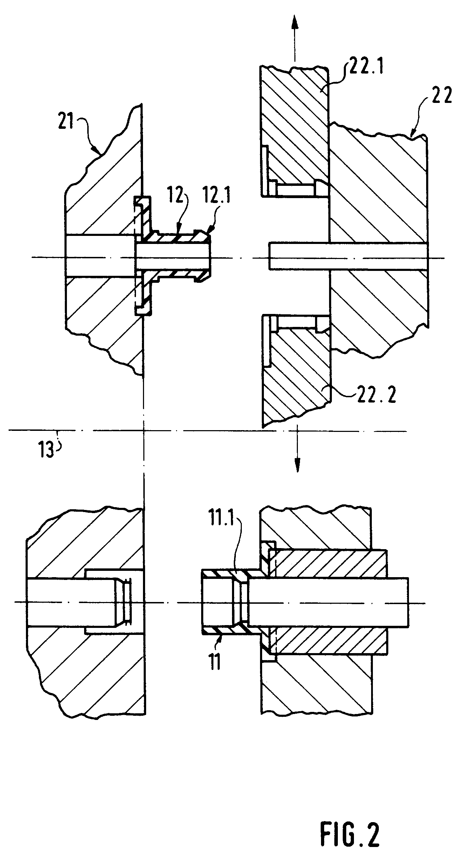

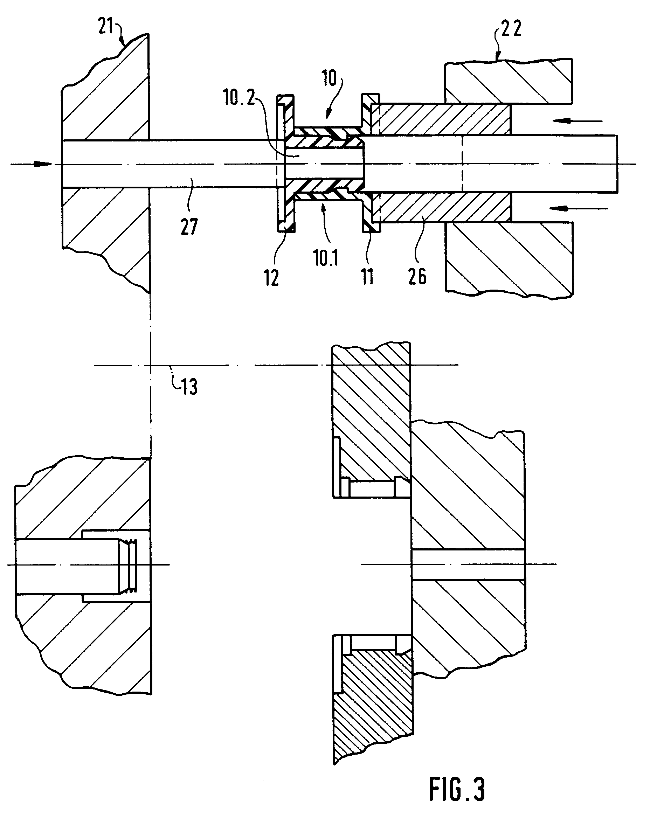

Die Fig. 1 bis 3 erläutern das erfindungsgemäße Verfahren zur Herstellung einer Laufrolle 10 (Fig. 3), die aus zwei Teilen 11 und 12 zusammengesetzt ist. Hierbei zeigt Fig. 1 einen Schnitt durch zwei Bereiche einer Spritzgießform 20, die aus zwei Formhälften 21 und 22 gebildet ist. Die Spritzgießform 20 weist zwei Hohlräume 23 und 24 zur Formung der beiden Rollenteile 11 und 12 auf, wobei die Hohlräume 23 und 24 symmetrisch zur zentralen Längsachse 13 der Spritzgießform 20 angeordnet sind. Fig. 1 zeigt die Spritzgießform 20 in geschlossenem Zustand, bereit zum Spritzgießen der beiden Rollenteile 11 und 12. Fig. 2 zeigt eine der Fig. 1 entsprechende Schnittdarstellung in einem zweiten Verfahrensstadium. Hier sind nun die beiden Formhälften 21 und 22 geöffnet, wobei das Rollenteil 11 von der Formhälfte 22 und das Rollenteil 12 von der Formhälfte 21 festgehalten wird. Die Formhälfte 22 weist zusätzlich zwei in einer Ebene senkrecht zur Längsachse 13 der Spritzgießform 20 verfahrbare Teile 22.1 und 22.2 auf, die in der Darstellung nach Fig. 2 geöffnet sind und somit das Rollenteil 12 freigeben. Anschließend an das in Fig. 2 gezeigte Verfahrensstadium findet eine Drehung der Formhälfte 22 um 180° statt, was in Fig. 1 auf der rechten Seite durch den Pfeil 25 angedeutet ist. Die Formhälfte 22 ist hierzu auf einem Drehteller gelagert, dessen Drehpunkt sich auf der Achse 13 der Spritzgießform befindet. Die Drehung der Gießformhälfte 22 um 180° bewirkt, daß das Rollenteil 11 in eine Stellung genau gegenüberliegend dem Rollenteil 12 gebracht wird und dort, wie in Fig. 3 gezeigt ist, durch Aufeinanderzubewegen einer in Achslängsrichtung beweglichen ersten Teil 26 in Form einer Hülse in der Gießformhälfte 22 und einem zweiten, ebenfalls in Achslängsrichtung beweglich in der ersten Gießformhälfte 21 angeordneten Teil 27 auf das Rollenteil 12 gedrückt und dadurch mit diesem zu einer fertigen Laufrolle 10 gekoppelt. Anschließend kann durch Zurückfahren der Teile 27 und 26 in ihre Ausgangsposition die fertige Laufrolle 10 ausgeworfen werden. Dabei bildet das Rollenteil 11 den äußeren Teil, d. h. die Lauffläche 10.1 der Laufrolle 10, während das Rollenteil 12 in das Rollenteil 11 eingeführt wird und eine Aufnahme 10.2 für eine Achse oder Achszapfen bildet. Sowohl das Rollenteil 11 als auch das Rollenteil 12 bestehen aus einem begrenzt elastischen Kunststoff und sind mit umlaufenden Rastvorsprüngen 11.1 bzw. 12.1 versehen, die sich nach Zusammensetzen der Laufrolle 10 jeweils hintergreifen und somit die beiden Teile 11 und 12 unlösbar koppeln.

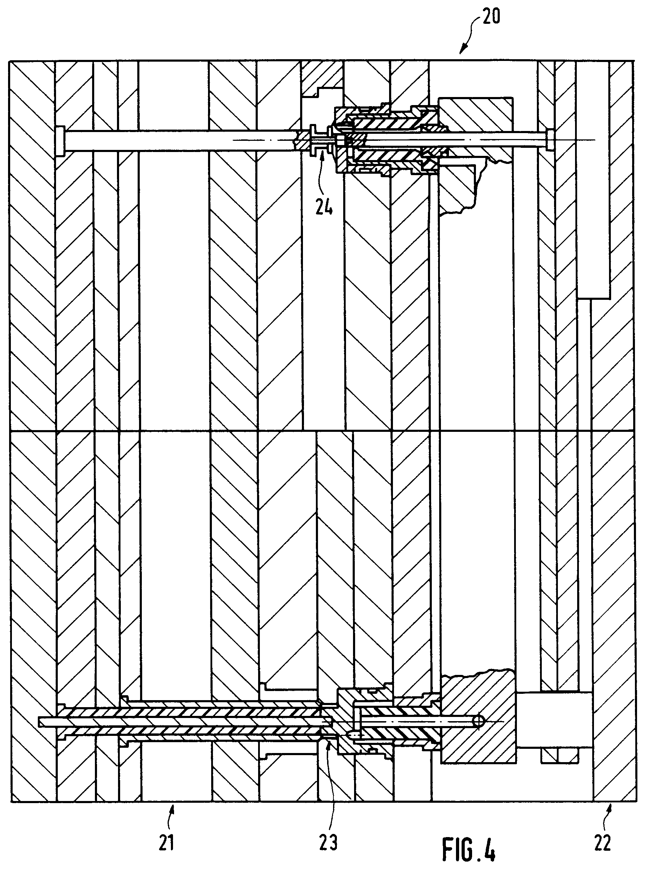

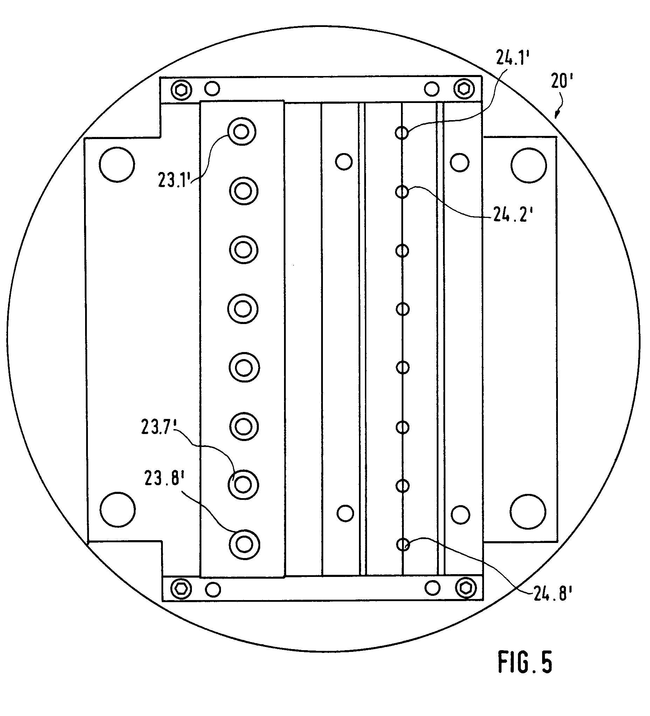

Das Schnittbild nach Fig. 4 zeigt noch einmal einen vollständigen Überblick über die Spritzgießform 20 mit den beiden Formhälften 21 und 22 und den beiden Hohlräumen 23 und 24 zum Gießen der Teile 11 und 12. In Fig. 5 ist eine Draufsicht auf eine Formhälfte einer Vielfachform 20' mit jeweils acht Hohlräumen 23.1' bis 23.8' zur Herstellung von Rollenteilen 11 und acht Hohlräumen 24.1' bis 24.8' zur Herstellung von Rollenteilen 12 darstellt. Durch Verdrehen einer der beiden Formhälften der Spritzgießform 20' um 180° kommt das im Hohlraum 24.1' gegossene Rollenteil 12 auf das im Hohlraum 23.8' gegossene Rollenteil 11, das Rollenteil aus dem Hohlraum 24.2' gegenüber dem Rollenteil 11 des Hohlraumes 23.7' usw. zu liegen, d. h. es findet jedesmal eine Paarung der Rollenteile aus denselben, einander durch die 180°-Drehung der einen Formhälfte fest zugeordneten Hohlräumen statt. Dies ermöglicht eine Optimierung der Formen, so daß gewährleistet ist, daß stets alle acht in der Form 20' gefertigten Laufrollen optimale Laufeigenschaften aufweisen.

## Patentansprüche

1. Verfahren zur Herstellung einer Laufrolle, insbesondere für Schubauszüge von Geschirrspülmaschinen, die aus zwei in axialer Richtung zusammengesetzten Teilen besteht, gekennzeichnet durch folgende Schritte:
- gleichzeitiges Spritzen der beiden Rollenteile (11, 12) in gesonderten Hohlräumen (23, 24) einer gemeinsamen Spritzgießform (20),
- Öffnen der Spritzgießform (20), wobei die beiden Rollenteile (11, 12) an gegenüberliegenden Hälften (22, 21) der Spritzgießform (20) festgehalten werden,
- Gegeneinanderverdrehen der Spritzgießformhälften (21, 22), so daß sich die beiden Teile (11, 12) der Laufrolle (10) gegenüberstehen,
- Koppelung der beiden Teile (11, 12) durch Aufeinanderdrücken mittels mindestens eines Teils (26, 27) der Spritzgießform (20) zu einer fertigen Laufrolle (10).

2. Verfahren nach Anspruch 1, dadurch gekennzeichnet, daß gleichzeitig mehrere Laufrollenteile (11, 12) in der Spritzgießform (20') gegossen und zu fertigen Laufrollen (10) montiert werden.

3. Spritzgegossene Laufrolle, die aus zwei in axialer Richtung zusammengesetzten Teilen besteht und nach dem Verfahren nach Anspruch 1 oder 2 hergestellt ist, dadurch gekennzeichnet, daß der eine Teil (11) die Lauffläche (10.1) der Laufrolle (10) und der andere Teil (12) eine zentrale Aufnahmeöffnung (10.2) der Laufrolle (10) für eine Achse oder für Achszapfen bildet.

4. Laufrolle nach Anspruch 3, dadurch gekennzeichnet, daß die beiden Rollenteile (11, 12) durch eine Rastverbindung (11.1, 12.1) miteinander unlösbar gekoppelt sind.

5. Laufrolle nach Anspruch 3 oder 4, dadurch gekennzeichnet, daß die beiden Rollenteile (11, 12) mit einer gegenseitigen Verdrehsicherung ausgestattet sind.

6. Spritzgießform zur Herstellung einer aus zwei in axialer Richtung zusammengesetzten Teilen bestehenden Laufrolle nach dem Verfahren gemäß Anspruch 1 oder 2, dadurch gekennzeichnet, daß sie von zwei in axialer Richtung gegeneinander verfahrbaren und um die Längsachse (13) relativ zueinander verdrehbaren Formhälften (21, 22) gebildet ist, die gemeinsam mindestens einen ersten Hohlraum (23) zur Formung des ersten Laufrollenteils (11) und mindestens einen zweiten Hohlraum (24) zur Formung des zweiten Laufrollenteils (12) bilden, wobei die ersten und zweiten Hohlräume (23, 24) jeweils bezüglich der Längsachse (13) der Spritzgießform (20) symmetrisch angeordnet sind, und wobei mindestens eine der Formhälften (21, 22) einen in axialer Richtung beweglichen Teil (26, 27) zum Aufeinanderdrücken der beiden Laufrollenteile (11, 12) aufweist.

7. Spritzgießform nach Anspruch 6, dadurch gekennzeichnet, daß beide Formhälften (21, 22) im Bereich der Hohlräume (23, 24) für die beiden Laufrollenteile (11, 12) in axialer Richtung bewegliche Teile (26, 27) zum Aufeinanderdrücken der Laufrollenteile (11, 12) aufweisen.

8. Spritzgießform nach Anspruch 6 oder 7, dadurch gekennzeichnet, daß eine der Formhälften (21) nicht rotierend und die andere Formhälfte (22) um ± 180° um die Längsachse (13) der Spritzgießform (20) verdrehbar angeordnet ist.

## Claims

**1.** A process for producing a running roller, particularly for pull-out drawers of dishwasher machines, which consists of two parts which are assembled axially, characterised by the following steps:
- simultaneous injection moulding of the two roller parts (11, 12) in separate cavities (23, 24) of a common injection mould (20),
- opening the injection mould (20), with the two roller parts (11, 12) being fastened to opposite halves (22, 21) of the injection mould (20),
- rotating the injection mould halves (21, 22) in relation to each other so that the two parts (11, 12) of the running roller (10) are opposite each other,
- coupling the two parts (11, 12) by pressing them on to each other by means of at least one part (26, 27) of the injection mould (20) to form a finished running roller (10).

**2.** A process according to claim 1, characterised in that a plurality of running roller parts (11, 12) are moulded simultaneously in the injection mould (20') and are assembled to form finished running rollers (10).

**3.** An injection moulded running roller which consists of two parts which are assembled axially and which is produced by the process according to claims 1 or 2, characterised in that one part (11) forms the running face (10.1) of the running roller (10) and the other part (12) forms a central receiver opening (10.2) of the running roller (10) for an axle or for axle journals.

**4.** A running roller according to claim 3, characterised in that the two roller parts (11, 12) are non-detachably coupled to each other by a locking joint (11.1, 12.1).

**3.** A running roller according to claims 3 or 4, characterised in that the two roller parts (11, 12) are equipped with a locking device which prevents their rotation in relation to each other.

**6.** An injection mould for the production of a running roller, consisting of two parts which are assembled axially, by the process according to claims 1 or 2, characterised in that it is formed by two mould halves (21, 22) which can move axially in relation to each other and which can rotate in relation to each other about the longitudinal axis (13), and which jointly form at least one first cavity (23) for moulding the first running roller part (11) and at least one second cavity (24) for moulding the second running roller part (12), wherein the first and second cavities (23, 24) are each symmetrically disposed with respect to the longitudinal axis (13) of the injection mould (20), and wherein at least one of the mould parts (21, 22) comprises an axially movable part (26, 27) for pressing the two running roller parts (11, 12) on to each other.

**7.** An injection mould according to claim 6, characterised in that both mould halves (21, 22) comprise axially movable parts (26, 27) in the region of the cavities (23, 24) for the two running roller parts (11, 12) for pressing the two running roller parts (11, 12) on to each other.

**8.** An injection mould according to claims 6 or 7, characterised in that one of the mould halves (21) is disposed non-rotatably and the other mould half (22) is disposed so that it can rotate by ±180° about the longitudinal axis (13) of the injection mould (20).

## Revendications

1. Procédé pour la fabrication d'une roulette, en particulier pour tiroirs extractibles de lave-vaisselle, qui est constituée de deux parties assemblées en direction axiale, caractérisé par les étapes suivantes :
- injection simultanée des deux parties de roulette (11, 12) dans des cavités distinctes (23, 24) d'un moule d'injection commun (20),
- ouverture du moule d'injection (20), les deux parties de roulette (11, 12) étant maintenues sur des moitiés opposées (22, 21) du moule d'injection (20),
- rotation l'une par rapport à l'autre des moitiés de moule d'injection (21, 22), de façon que les deux parties (11, 12) de la roulette (10) soient en vis-à-vis,
- accouplement des deux parties (11, 12) par emboîtement à l'aide d'au moins une partie (26, 27) du moule d'injection (20) pour obtenir une roulette finie (10).

2. Procédé selon la revendication 1, caractérisé en ce que plusieurs parties de roulette (11, 12) sont simultanément moulées dans le moule d'injection (20') et assemblées pour obtenir des roulettes finies (10).

3. Roulette moulée par injection qui est constituée de deux parties assemblées en direction axiale et qui est fabriquée conformément au procédé selon la revendication 1 ou 2, caractérisée en ce que l'une des parties (11) forme la surface de roulement (10.1) de la roulette (10) et l'autre partie (12) un orifice de logement central (10.2) de la roulette (10) pour un axe ou pour des tourillons d'axe.

4. Roulette selon la revendication 3, caractérisée en ce que les deux parties de roulette (11, 12) sont accouplées l'une à l'autre, de manière indémontable, à l'aide d'une liaison à encliquetage (11.1, 12.1).

5. Roulette selon la revendication 3 ou 4, caractérisée en ce que les deux parties de roulette (11, 12) sont munies d'un moyen de blocage mutuel en rotation.

6. Moule d'injection pour la fabrication d'une roulette constituée de deux parties assemblées en direction axiale conformément au procédé selon la revendication 1 ou 2, caractérisé en ce qu'il est formé de deux moitiés de moule (21, 22) qui sont mobiles l'une par rapport à l'autre dans la direction axiale et peuvent tourner l'une par rapport à l'autre autour de l'axe longitudinal (13) et qui forment conjointement au moins une première cavité (23) de moulage de la première partie de roulette (11) et au moins une seconde cavité (24) de moulage de la seconde partie de roulette (12), les première et seconde cavités (23, 24) étant disposées respectivement de manière symétrique par rapport à l'axe longitudinal (13) du moule d'injection (20), et au moins l'une des moitiés de moule (21, 22) comportant une partie (26, 27) mobile dans la direction axiale pour emboîter les deux parties de roulette (11, 12).

7. Moule d'injection selon la revendication 6, caractérisé en ce que les deux moitiés de moule (21, 22) comportent, dans la zone des cavités (23, 24) pour les deux parties de roulette (11, 12), des parties (26, 27) mobiles dans la direction axiale pour emboîter les parties de roulette (11, 12).

8. Moule d'injection selon la revendication 6 ou 7, caractérisé en ce que l'une des moitiés de moule (21) est montée sans possibilité de rotation et l'autre moitié de moule (22) est montée rotative sur ± 180° autour de l'axe longitudinal (13) du moule d'injection (20).
